# EUROPEAN PATENT SPECIFICATION

(11) **EP 2 280 252 B1**
(45) Date of publication and mention of the grant of the patent: **05.09.2018**
(21) Application number: 09750306.4
(22) Date of filing: 27.02.2009
(51) Int. Cl.: F23N 5/00, F23N 5/24, G01F 3/22, G01D 21/00, F23N 5/18

(54) **APPLIANCE MONITOR**
GERÄTEMONITOR
DISPOSITIF DE SURVEILLANCE D'APPAREIL

(30) Priority: 20.05.2008 JP 2008132130
(43) Date of publication of application: 02.02.2011
(73) Proprietor: Panasonic Corporation, Kadoma-shi Osaka 571-8501 (JP); The High Pressure Gas Safety Institute of Japan, Tokyo 105-8447 (JP)
(72) Inventor: HONDA, Tsuyoshi, Osaka 571-8501 (JP); MATSUDA, Akira, Osaka 571-8501 (JP); MURASE, Kouji, Osaka 571-8501 (JP); YASUDA, Kenji, Osaka 571-8501 (JP); NAMBA, Mitsuo, Machida-shi, Tokyo (JP); KUBO, Kazuo, Osaka 571-8501 (JP); SAITO, Hisashi, Machida-shi, Tokyo (JP)
(74) Representative: Schwabe - Sandmair - Marx
(86) International application number: PCT/JP2009/000878
(87) International publication number: WO 2009/141944

(56) References cited:
- DE-A1- 10 055 977
- JP-A- 2001 183 186
- JP-A- 2005 257 310
- JP-A- 2007 133 469
- JP-A- 2007 185 083
- US-A1- 2006 204 911

## Description

### Technical Field

The present invention relates to an appliance monitoring apparatus for computing and determining the amount of CO₂ emissions, etc., generated during combustion by a gas combustion appliance, etc., that utilizes, for example, town gas, LP gas, etc.

### Background Art

Conventionally, appliance monitoring apparatus of this type monitors security information such as an amount of gas consumed by a gas combustion appliance and grounds for a cutoff when a gas is shut off (see, for example, Patent Document 1).
Patent Document 1: JP-A-2001-236116
Patent Document 2 discloses a related appliance monitoring apparatus.
Patent Document 2: US 2006/204911

### Disclosure of the Invention

### Problem to be Solved by the Invention

However, the conventional appliance monitoring apparatus merely handles the amount of gas used and security information for the case of a gas cutoff, and does not take into account the influence (e.g., an amount of CO₂ emission) of use of a gas combustion appliance on a terrestrial environment. The appliance monitoring apparatus cannot address social needs for a desire to know the foregoing information against a backdrop of a growing concern about the terrestrial environment.

### Means for Solving the Problem

In order to solve the problem, a safety apparatus of the present invention detects a gas flow by use of a flow detection unit disposed in a gas flow path in a gas meter. Based on the signal, an appliance determination unit determines a gas appliance used by a client by learning a flow value, a gas consumption time, etc, and outputs information about the determined gas appliance and the gas flow signal used by the gas appliance to a subsequent stage.

A CO₂ emission data storage unit previously stores an amount of CO₂ emission produced during combustion for each type of the gas appliance as database. A comparative CO₂ emission data storage unit previously stores, as database, an amount of CO₂ emission produced during combustion by an appliance to be compared with a gas appliance used by the client (e.g., a gas appliance that produces the minimum amount of CO₂ emission or electric equipment having a performance similar to that of the gas appliance used by the client). A CO₂ emission calculation unit computes, integrates, and stores an amount of CO₂ emission based on the CO₂ emission data pertaining to a gas appliance selected from the CO₂ emission data storage unit on receipt of a signal from the appliance determination unit, a gas flow of the selected gas appliance, and a gas consumption time of the selected gas appliance. Similarly, the CO₂ emission calculation unit computes, integrates, and stores a comparative amount of CO₂ emission based on CO₂ emission data pertaining to a comparative appliance selected from the comparative CO₂ emission data storage unit, the gas flow of the selected comparative gas appliance, and the gas consumption time of the selected comparative gas appliance. Further, the CO₂ emission calculation unit computes and stores a difference between the amount of CO₂ emission and the comparative amount of CO₂ emission. Accordingly, It is possible to determine an amount of CO₂ emission produced by using the gas appliance by the client and a difference between the amount of CO₂ emission produced by the gas appliance and an amount of CO₂ emission from a gas appliance producing a minimum amount of CO₂ emission or an amount of CO₂ emission produced by electric equipment having a performance similar to that of the gas appliance used by the client. Hence, it becomes possible to address social needs for a desire to know the foregoing information against a backdrop of a growing concern about the terrestrial environment.

### Advantages of the Invention

The appliance monitoring apparatus of the present invention can determine an amount of CO₂ emission produced by using a gas appliance by the client and a difference between the amount of CO₂ emission produced by the gas appliance and an amount of CO₂ emission from a gas appliance producing a minimum amount of CO₂ emission or an amount of CO₂ emission produced by electric equipment having a performance similar to that of the gas appliance used by the client. Hence, it becomes possible to address social needs for a desire to know the foregoing information against a backdrop of a growing concern about the terrestrial environment.

### Brief Description of the Drawings

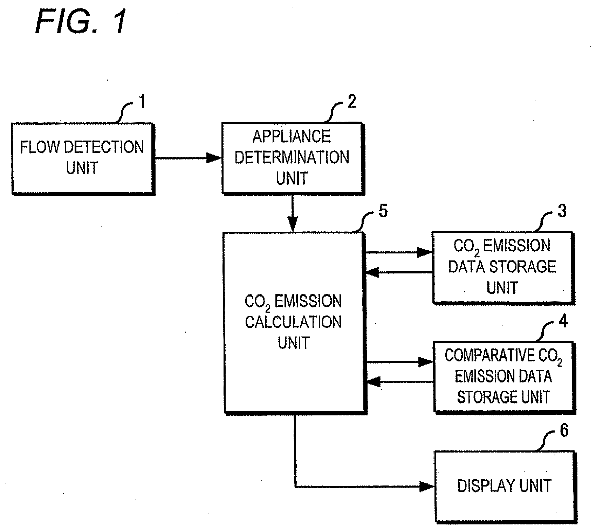

Fig. 1 is a control block diagram of an appliance monitoring apparatus of a first embodiment of the present invention.

### Description of Reference Signs

- 1: FLOW DETECTION UNIT
- 2: APPLIANCE DETERMINATION UNIT
- 3: CO₂ EMISSION DATA STORAGE UNIT
- 4: COMPARATIVE CO₂ EMISSION DATA STORAGE UNIT
- 5: CO₂ EMISSION CALCULATION UNIT
- 6: DISPLAY UNIT

### Best Mode for Carrying Out the invention

A first embodiment provides a flow detection unit disposed in a gas flow path in a gas meter and configured to detect a gas flow; an appliance determination unit configured to determine a gas appliance used by a client by learning a flow value used by the client and a gas consumption time in accordance with a signal from the gas flow detection unit, and to output a gas flow signal used by the gas appliance; a CO₂ emission data storage unit configured to store, as database, an amount of a CO₂ emission previously determined for each type of the gas appliance; a comparative CO₂ emission data storage unit configured to previously store, as database, an amount of CO₂ emission produced during combustion by an appliance to be compared with a gas appliance used by the client; and a CO₂ emission calculation unit configured to: compute, integrate, and store an amount of CO₂ emission based on the CO₂ emission data pertaining to a gas appliance selected from the CO₂ emission data storage unit on receipt of a signal from the appliance determination unit, a gas flow of the selected gas appliance, and a gas consumption time of the selected gas appliance; compute, integrate, and store a comparative amount of CO₂ emission based on CO₂ emission data pertaining to a comparative appliance selected from the comparative CO₂ emission data storage unit, the gas flow of the selected comparative gas appliance on receipt of a signal from the appliance determination unit, and the gas consumption time of the selected comparative gas appliance; and compute and store a difference between the amount of CO₂ emission and the comparative amount of CO₂ emission. Accordingly, it is possible to determine the amount of CO₂ emission produced by using a gas appliance by the client and a difference between the amount of CO₂ emission produced by the gas appliance and an amount of CO₂ emission from a gas appliance producing a minimum amount of CO₂ emission or an amount of CO₂ emission produced by electric equipment having a performance similar to that of the gas appliance used by the client. Hence, it becomes possible to address social needs for a desire to know the foregoing information against a backdrop of a growing concern about the terrestrial environment.

In a second embodiment, the CO₂ emission data storage is configured such that the database of CO₂ emission previously stored for each type of the gas appliance is changeable from an outside. Accordingly, it is possible to address an addition to the database regarding an amount of CO₂ emission for a new type of a gas appliance which has never been before, a change in the database of CO₂ emission caused by an improvement to the appliance, etc. Consequently, an amount of CO₂ emission produced by using the gas appliance by the user can be determined from the updated CO₂ emission database. Therefore, a more accurate amount of CO₂ emission and a difference between the amount of CO₂ emission and the amount of CO₂ emission of the gas appliance producing the minimum amount of CO₂ emission or the amount of CO₂ emission produced by an electric appliance having the performance similar to that of the gas appliance used by the client.

In a third embodiment, the comparative CO₂ emission data storage unit is configured such that the database of comparative CO₂ emission previously stored for each type of gas appliance is changeable from an outside. Accordingly, it is possible to address an addition of new data to the comparative CO₂ emission database when a new type of a gas appliance which has never been before is added, and a change in the database of CO₂ emission caused by an improvement to the appliance e.g., pertaining to the minimum comparative amount of CO₂ emission and the amount of CO₂ emission produced by electric equipment having a performance similar to that of the gas appliance used by the client. Thus, it is possible to determine, from the comparative CO₂ emission database, a difference between the amount of CO₂ emission produced by using the gas appliance by the user and the amount of CO₂ emission produced by a latest gas appliance producing the minimum amount of CO₂ emission or by electric equipment having a performance similar to that of the gas appliance used by the client. Consequently, it is possible to determine more accurate amount of CO₂ emission and difference between the amount of CO₂ emission produced by using the gas appliance by the client and the amount of CO₂ emission produced by the gas appliance producing the minimum amount of CO₂ emission or by the electric equipment.

In a fourth embodiment, when the difference between the integrated and stored amount of CO₂ emission and the comparative amount of CO₂ emission has exceeded a value of preset CO₂ emission difference, the CO₂ emission calculation unit outputs that effect to an outside. Accordingly, it is possible to determine that a difference between the amount of CO₂ emission and the comparative amount of CO₂ emission has exceeded a given value (e.g., a value of standard determined in consideration of influence on an environment) and to send a notification, which can clarify whether the amount of CO₂ emission from the gas appliance used by the client is large. Based on the information, when an appliance producing a large amount of CO₂ emission is used, replacement purchase of the appliance can be promoted, and when the amount of gas consumed by the client is large, self-restraint in a frequency of use of the gas appliance and an operating time of the gas appliance can be induced. Consequently, the amount of CO₂ emission produced by use of the gas appliance can be reduced.

In a fifth embodiment, information about the integrated and stored amount of CO₂ emission and the difference between the amount of CO₂ emission and the comparative amount of CO₂ emission is displayed, which can indicate the amount of CO₂ emission or the difference between an amount of CO₂ emission and a comparative amount of CO₂ emission at the time of watching of the display. As a result, it is possible to readily confirm whether the amount of CO₂ emission produced by the client is large and whether the amount of CO₂ emission produced by the client is larger than the amount of CO₂ emission produced by a latest gas appliance producing a minimum amount of CO₂ emission or the amount of CO₂ emission produced by electric equipment having a performance similar to that produced by the gas appliance used by the client. Consequently, when an appliance producing a large amount of CO₂ emission is used, it becomes much easier to promote replacement purchase of the appliance, and when the amount of gas consumed by the client is large, it becomes much easier to appeal for self-restraint on a frequency of use of the gas appliance and an operating time of the gas appliance.

In a sixth embodiment, information about the integrated and stored amount of CO₂ emission, the comparative amount of CO₂ emission, and the difference between the amount of CO₂ emission and the comparative amount of CO₂ emission is output to an outside. By obtaining the information in this way, the integrated and stored amount of CO₂ emission, the comparative amount of CO₂ emission, and the difference between the amount of CO₂ emission and the comparative amount of CO₂ emission can be confirmed in real time. Further, by providing a gas billing statement, etc., with the information, when an appliance producing a large amount of CO₂ emission is used, it becomes much easier to promote replacement purchase of the appliance, and when the amount of gas consumed by the client is large, it becomes much easier to appeal for self-restraint on a frequency of use of the gas appliance and an operating time of the gas appliance.

Embodiments of the present invention are described below with reference to the drawings. However, the present invention shall not be limited to the embodiments. Although CO₂ generated by combusting operation of a gas appliance is described in the embodiments of the invention, the present invention may be embodied as an appliance monitoring apparatus for a substance affecting terrestrial environment by combustion gases, such as CO, NO_{X}, and SO_{X}, which is not limited to CO₂.

### (First Embodiment)

Fig. 1 is a control block diagram of an appliance monitoring apparatus of a first embodiment of the present invention.

In Fig. 1, reference numeral 1 designates a flow detection unit disposed in a gas flow flow path in a gas meter. Reference numeral 2 designates an appliance determination unit configured to determine a gas appliance used by a client. Reference numeral 3 designates a CO₂ emission data storage unit configured to store, as database, an amount of CO₂ emission previously determined for each type of gas appliance. Reference numeral 4 designates a comparative CO₂ emission data storage unit configured to previously store, as database, an amount of CO₂ emission produced during combustion by an appliance to be compared with the gas appliance used by the client. Reference numeral 5 designates a CO₂ emission calculation unit configured to compute, integrate, and store an amount of CO₂ emission based on the data pertaining to an amount of CO₂ emission of a gas appliance selected from the CO₂ emission data storage unit, a gas flow of the selected gas appliance, and a gas consumption time of the selected gas appliance. Similarly, the CO₂ emission calculation unit is configured to compute, integrate, and store a comparative amount of CO₂ emission based on the CO₂ emission data pertaining to a comparative appliance selected from the comparative CO₂ emission comparative data storage unit, a gas flow of the selected comparative gas appliance, and a gas consumption time of the selected comparative gas appliance. Further, the CO₂ emission calculation unit configured to compute and store a difference between the amount of CO₂ emission and the comparative amount of CO₂ emission. The display unit 6 is provided so as to display the CO₂ emission data and the difference between the amount of CO₂ emission and the comparative amount of CO₂ emission.

Operations and effects of the appliance monitoring apparatus are now described. The flow detection unit 1 is disposed in a gas flow path (not shown in the drawing) of the gas meter and detects the amount of gas flow. In accordance with a gas flow detection signal, the appliance determination unit 2 learns a flow value, a gas consumption time, etc, thereby determining a gas appliance used by a client and outputting the gas flow signal used by the gas appliance. The CO₂ emission data storage unit 3 stores, as database, an amount of CO₂ emission previously determined for each type of the gas appliance. The comparative CO₂ emission data storage unit 4 previously stores, as database, an amount of CO₂ emission produced during combustion by an appliance to be compared with a gas appliance used by the client (e.g., a gas appliance that produces the minimum amount of CO₂ emission or electric equipment having a performance similar to that of the gas appliance used by the client). On receipt of the signal from the appliance determination unit 2, the CO₂ emission calculation unit 5 computes, integrates, and stores an amount of CO₂ emission from the CO₂ emission data pertaining to a gas appliance selected from the CO₂ emission data storage unit 3, a gas flow of the selected gas appliance, and a gas consumption time of the selected gas appliance. Similarly, on receipt of the signal from the appliance determination unit 2, the CO₂ emission calculation unit 5 computes, integrates, and stores a comparative amount of CO₂ emission from CO₂ emission data pertaining to a comparative appliance selected from the comparative CO₂ emission data storage unit 4, the gas flow of the selected comparative gas appliance, and the gas consumption time of the selected comparative gas appliance. Further, the CO₂ emission calculating unit 5 computes and stores the difference between the amount of CO₂ emission and the comparative amount of CO₂ emission. Accordingly, it is possible to determine the amount of CO₂ emission produced by using the gas appliance by the client and the difference between the amount of CO₂ emission produced by the gas appliance and an amount of CO₂ emission from the gas appliance producing a minimum amount of CO₂ emission or an amount of CO₂ emission produced by electric equipment having a performance similar to that of the gas appliance used by the client. Hence, it becomes possible to address social needs for a desire to know the foregoing information against a backdrop of a growing concern about the terrestrial environment.

The CO₂ emission data storage unit 3 may be configured such that the database of CO₂ emission previously stored for each type of gas appliance. Accordingly, it is possible to address an addition to the database regarding an amount of CO₂ emission for a new type of a gas appliance which has never been before, and a change in the database of CO₂ emission caused by an improvement to the appliance, etc. Consequently, an amount of CO₂ emission produced by using the gas appliance by the user can be determined from the updated CO₂ emission database. Therefore, more accurate amount of CO₂ emission and difference between the amount of CO₂ emission and the amount of CO₂ emission of a gas appliance producing the minimum amount of CO₂ emission or the amount of CO₂ emission produced by the electric appliance having a performance similar to that of the gas appliance used by the client can be determined.

The comparative CO₂ emission data storage unit 4 may be configured such that the database of comparative CO₂ emission previously stored for each type of gas appliance is changeable from an outside. Accordingly, it is possible to address an addition of new data to the comparative CO₂ emission database when a new type of a gas appliance which has never been before is added, and a change in the database of CO₂ emission caused by an improvement to the appliance, e.g., pertaining to the minimum comparative amount of CO₂ emission and the amount of CO₂ emission produced by electric equipment having a performance similar to that of the gas appliance used by the client. Thus, it is possible to determine, from the comparative CO₂ emission database, a difference between the amount of CO₂ emission produced by using the gas appliance by the user and the amount of CO₂ emission produced by a latest gas appliance producing the minimum amount of CO₂ emission or by electric equipment having a performance similar to that of a latest gas appliance used by the client. Consequently, it is possible to determine more accurate amount of CO₂ emission and difference between the amount of CO₂ emission produced by using the gas appliance by the client and the amount of CO₂ emission produced by the gas appliance producing the minimum amount of CO₂ emission or by the electric equipment having a performance similar to that of the gas appliance used by the client.

When the difference between the integrated and stored amount of CO₂ emission and the comparative amount of CO₂ emission has exceeded a value of preset CO₂ emission difference, the CO₂ emission calculation unit 5 may output that effect to an outside. Accordingly, it is possible to determine that a difference between the amount of CO₂ emission and the comparative amount of CO₂ emission has exceeded a given value (e.g., a value of standard determined in consideration of influence on an environment) and to send a notification, which can clarify whether the amount of CO₂ emission from the gas appliance used by the client is large. Based on the information, when an appliance producing a large amount of CO₂ emission is used, replacement purchase of the appliance can be promoted, and when the amount of gas consumed by the client is large, self-restraint in a frequency of use of the gas appliance and an operating time of the gas appliance can be induced. Consequently, the amount of CO₂ emission produced by use of the gas appliance can be reduced.

Information about the integrated and stored amount of CO₂ emission and the difference between the amount of CO₂ emission and the comparative amount of CO₂ emission may also be displayed. Accordingly, on watching the display unit 6, a person associated with the gas appliance (e.g., a gas appliance retail dealer, a common user, etc) can know an amount of CO₂ emission or a difference between an amount of CO₂ emission and a comparative amount of CO₂ emission, at the time of watching the display. As a result, it is possible to readily confirm whether the amount of CO₂ emission produced by the client is large and whether the amount of CO₂ emission produced by the client is larger than the amount of CO₂ emission produced by a latest gas appliance producing a minimum amount of CO₂ emission or the amount of CO₂ emission produced by electric equipment having a performance similar to that produced by the gas appliance used by the client. Consequently, when an appliance producing a large amount of CO₂ emission is used, it becomes much easier to promote replacement purchase of an appliance, and when the amount of gas consumed by the client is large, it becomes much easier to appeal for self-restraint on a frequency of use of the gas appliance and an operating time of the gas appliance.

Information about the integrated and stored amount of CO₂ emission, the comparative amount of CO₂ emission, and a difference between the amount of CO₂ emission and the comparative amount of CO₂ emission may be output to the outside. By obtaining the information in this way, the integrated and stored amount of CO₂ emission, the comparative amount of CO₂ emission, and the difference between the amount of CO₂ emission and the comparative amount of CO₂ emission can be confirmed in real time. Further, by providing a gas billing statement, etc., with the information, when an appliance producing a large amount of CO₂ emission is used, it becomes much easier to promote replacement purchase of the appliance, and when the amount of gas consumed by the client is large, it becomes much easier to appeal for self-restraint on a frequency of use of the gas appliance and an operating time of the gas appliance. Further, information may be reported to the outside of a gas cutoff apparatus, e.g., an alarm system (not shown) of a gas supplying company, via a communication network such as a phone line.

### Industrial Applicability

As described above, the appliance monitoring apparatus of the present invention can report an amount of CO₂ emission of each appliance. Therefore, it is useful for enlightening the user on an environmental consciousness.

## Claims

1. An appliance monitoring apparatus comprising,
a flow detection unit (1) disposed in a gas flow path in a gas meter and configured to detect a gas flow and to output a gas flow signal;
an appliance determination unit (2) configured to determine a gas appliance used by a client from the gas flow and a gas consumption time in accordance with the signal from the gas flow detection unit (1), and to output the gas flow signal used by the gas appliance;
a CO₂ emission data storage unit (3) configured to store, as database, an amount of a CO₂ emission previously determined for each appliance from a plurality of types of gas appliances;
a comparative CO₂ emission data storage unit (4) configured to previously store, as database, an amount of CO₂ emission produced during combustion by an appliance to be compared with a gas appliance used by the client; and
a CO₂ emission calculation unit (5) configured to:
compute, integrate, and store an amount of CO₂ emission based on the CO₂ emission data pertaining to a gas appliance selected from the CO₂ emission data storage unit on receipt of a signal from the appliance determination unit, a gas flow of the selected gas appliance, and a gas consumption time of the selected gas appliance;
compute, integrate, and store a comparative amount of CO₂ emission based on CO₂ emission data pertaining to a comparative appliance selected from the comparative CO₂ emission data storage unit, the gas flow of the selected comparative gas appliance on receipt of a signal from the appliance determination unit, and the gas consumption time of the selected comparative gas appliance; and
compute and store a difference between the amount of CO₂ emission and the comparative amount of CO₂ emission.

2. The appliance monitoring apparatus according to claim 1, wherein the CO₂ emission data storage unit (3) is configured such that the database of CO₂ emission previously stored for each type of the gas appliance is changeable from an outside.

3. The appliance monitoring apparatus according to claim 1, wherein the comparative CO₂ emission data storage unit (4) is configured such that the database of comparative CO₂ emission previously stored for each type of the gas appliance is changeable from an outside.

4. The appliance monitoring apparatus according to claim 1, wherein when the difference between the integrated and stored amount of CO₂ emission and the comparative amount of CO₂ emission has exceeded a value of a preset CO₂ emission difference, the CO₂ emission calculation unit (5) outputs that effect to an outside.

5. The appliance monitoring apparatus according to any one of claims 1 to 4, wherein information about the integrated and stored amount of CO₂ emission and the difference between the amount of CO₂ emission and the comparative amount of CO₂ emission is displayed.

6. The appliance monitoring apparatus according to any one of claims 1 to 4, wherein information about the integrated and stored amount of CO₂ emission, the comparative amount of CO₂ emission, and the difference between the amount of CO₂ emission and the comparative amount of CO₂ emission is output to an outside.

## Patentansprüche

1. Geräteüberwachungsvorrichtung, umfassend
eine Flusserfassungseinheit (1), die in einem Gasflusspfad in einem Gasmesser angeordnet ist und konfiguriert ist, einen Gasfluss zu erfassen und ein Gasflusssignal auszugeben;
eine Gerätebestimmungseinheit (2), die konfiguriert ist, ein Gasgerät, das von einem Kunden verwendet wird, vom Gasfluss und eine Gasverbrauchszeit in Übereinstimmung mit dem Signal von der Gasflusserfassungseinheit (1) zu bestimmen und das Gasflusssignal, das von dem Gasgerät verwendet wird, auszugeben;
eine CO₂-Emissions-Datenspeichereinheit (3), die konfiguriert ist, als Datenbank eine Menge einer CO₂-Emission zu speichern, die zuvor für jedes Gerät von einer Vielzahl von Typen von Gasgeräten bestimmt worden ist;
eine Vergleichs-CO₂-Emissions-Datenspeichereinheit (4), die konfiguriert ist, zuvor als Datenbank eine Menge an CO₂-Emission zu speichern, die während der Verbrennung durch ein Gerät, das mit einem Gasgerät, das von einem Kunden verwendet wird, zu vergleichen ist, produziert wurde; und
eine CO₂-Emissions-Berechnungseinheit (5), die zu Folgendem konfiguriert ist:
Berechnen, Integrieren und Speichern einer Menge an CO₂-Emission basierend auf den CO₂-Emissionsdaten bezüglich eines Gasgeräts, das von der CO₂-Emissions-Datenspeichereinheit nach Erhalt eines Signals von der Gerätebestimmungseinheit ausgewählt wurde, eines Gasflusses des ausgewählten Gasgeräts und einer Gasverbrauchszeit des ausgewählten Gasgeräts;
Berechnen, Integrieren und Speichern einer Vergleichsmenge an CO₂-Emission basierend auf den CO₂-Emissionsdaten bezüglich eines Vergleichsgeräts, das von der Vergleichs-CO₂-Emissions-Datenspeichereinheit ausgewählt wurde, des Gasflusses des ausgewählten Vergleichsgasgeräts nach Erhalt eines Signals von der Gerätebestimmungseinheit und der Gasverbrauchszeit des ausgewählten Vergleichsgasgeräts; und
Berechnen und Speichern einer Differenz zwischen der Menge an CO₂-Emission und der Vergleichsmenge an CO₂-Emission.

2. Geräteüberwachungsvorrichtung nach Anspruch 1, wobei die CO₂-Emissions-Datenspeichereinheit (3) so konfiguriert ist, dass die Datenbank der CO₂-Emission, die zuvor für jeden Typ des Gasgeräts gespeichert wurde, von außen verändert werden kann.

3. Geräteüberwachungsvorrichtung nach Anspruch 1, wobei die CO₂-Emissions-Datenspeichereinheit (4) so konfiguriert ist, dass die Datenbank der CO₂-Emission, die zuvor für jeden Typ des Gasgeräts gespeichert wurde, von außen verändert werden kann.

4. Geräteüberwachungsvorrichtung nach Anspruch 1, wobei, wenn die Differenz zwischen der integrierten und gespeicherten Menge an CO₂-Emission und der Vergleichsmenge an CO₂-Emission einen Wert einer vorgegebenen CO₂-Emissionsdifferenz überschritten hat, die CO₂-Emissions-Berechnungseinheit (5) diesen Effekt nach außen ausgibt.

5. Geräteüberwachungsvorrichtung nach einem der Ansprüche 1 bis 4, wobei Informationen über die integrierte und gespeicherte Menge an CO₂-Emission und die Differenz zwischen der Menge an CO₂-Emission und der Vergleichsmenge an CO₂-Emission angezeigt wird.

6. Geräteüberwachungsvorrichtung nach einem der Ansprüche 1 bis 4, wobei Informationen über die integrierte und gespeicherte Menge an CO₂-Emission, die Vergleichsmenge an CO₂-Emission und die Differenz zwischen der Menge an CO₂-Emission und der Vergleichsmenge an CO₂-Emission nach außen ausgegeben wird.

## Revendications

1. Dispositif de surveillance d'appareil, comprenant :
une unité de détection de débit (1) disposée dans un chemin de débit de gaz dans un compteur à gaz et configurée pour détecter un débit de gaz et pour produire en sortie un signal de débit de gaz ;
une unité de détermination d'appareil (2) configurée pour déterminer un appareil à gaz utilisé par un client à partir du débit de gaz et un temps de consommation de gaz conformément au signal à partir de l'unité de détection de débit de gaz (1), et pour produire en sortie le signal de débit de gaz utilisé par l'appareil à gaz ;
une unité de stockage de données d'émission de CO₂ (3) configurée pour stocker, en tant que base de données, une quantité d'une émission de CO₂ auparavant déterminée pour chaque appareil parmi une pluralité de types d'appareils à gaz ;
une unité de stockage de données d'émission de CO₂ de comparaison (4) configurée pour stocker auparavant, en tant que base de données, une quantité d'émission de CO₂ produite durant la combustion par un appareil destiné à être comparé à un appareil à gaz utilisé par le client ; et
une unité de calcul d'émission de CO₂ (5) configurée pour :
calculer, intégrer, et stocker une quantité d'émission de CO₂ sur la base des données d'émission de CO₂, concernant un appareil à gaz sélectionné, à partir de l'unité de stockage de données d'émission de CO₂, lors de la réception d'un signal à partir de l'unité de détermination d'appareil, d'un débit de gaz de l'appareil à gaz sélectionné, et d'un temps de consommation de gaz de l'appareil à gaz sélectionné ;
calculer, intégrer, et stocker une quantité d'émission de CO₂ de comparaison sur la base de données d'émission de CO₂, concernant un appareil de comparaison sélectionné, à partir de l'unité de stockage de données d'émission de CO₂ de comparaison, du débit de gaz de l'appareil à gaz de comparaison sélectionné, lors de la réception d'un signal à partir de l'unité de détermination d'appareil, et du temps de consommation de gaz de l'appareil à gaz de comparaison sélectionné ; et
calculer et stocker une différence entre la quantité d'émission de CO₂ et la quantité d'émission de CO₂ de comparaison.

2. Dispositif de surveillance d'appareil selon la revendication 1, dans lequel l'unité de stockage de données d'émission de CO₂ (3) est configurée de telle sorte que la base de données d'émission de CO₂ auparavant stockée pour chaque type de l'appareil à gaz soit changeable à partir d'un extérieur.

3. Dispositif de surveillance d'appareil selon la revendication 1, dans lequel l'unité de stockage de données d'émission de CO₂ de comparaison (4) est configurée de telle sorte que la base de données d'émission de CO₂ de comparaison auparavant stockée pour chaque type de l'appareil à gaz soit changeable à partir d'un extérieur.

4. Dispositif de surveillance d'appareil selon la revendication 1, dans lequel, lorsque la différence entre la quantité d'émission de CO₂ intégrée et stockée et la quantité d'émission de CO₂ de comparaison a dépassé une valeur d'une différence prédéfinie d'émission de CO₂, l'unité de calcul d'émission de CO₂ (5) produit en sortie cet effet vers un extérieur.

5. Dispositif de surveillance d'appareil selon l'une quelconque des revendications 1 à 4, dans lequel des informations concernant la quantité d'émission de CO₂ intégrée et stockée et la différence entre la quantité d'émission de CO₂ et la quantité d'émission de CO₂ de comparaison sont affichées.

6. Dispositif de surveillance d'appareil selon l'une quelconque des revendications 1 à 4, dans lequel des informations concernant la quantité d'émission de CO₂ intégrée et stockée, la quantité d'émission de CO₂ de comparaison, et la différence entre la quantité d'émission de CO₂ et la quantité d'émission de CO₂ de comparaison sont produites en sortie vers un extérieur.
